# EUROPÄISCHE PATENTANMELDUNG

(11) **EP 3 214 344 A1**
(43) Veröffentlichungstag der Anmeldung: **06.09.2017**
(21) Anmeldenummer: 17159128.2
(22) Anmeldetag: 03.03.2017
(51) Int. Cl.: F16H 49/00, F16C 35/063

(54) **WELLENGENERATOR FÜR EIN SPANNUNGSWELLENGETRIEBE**

(30) Priorität: 04.03.2016 LU 92987
(71) Anmelder: Ovalo GmbH, 65555 Limburg (DE)
(72) Erfinder:
(74) Vertreter: Grabovac, Dalibor

(57) **Zusammenfassung**

Die Erfindung betrifft einen Wellengenerator für ein Spannungswellengetriebe, der in einem Hauptabschnitt einen Lagersitz für ein radialflexibles Wälzlager aufweist. Der Wellengenerator zeichnet sich dadurch aus, dass er einen sich in axialer Richtung an den Hauptabschnitt anschließenden und in einer Richtung von dem Hauptabschnitt weg verjüngenden Kegelabschnitt aufweist.

## Beschreibung

Die Erfindung betrifft einen Wellengenerator für ein Spannungswellengetriebe, der in einem Hauptabschnitt einen Lagersitz für ein radialflexibles Wälzlager aufweist.

Die Erfindung betrifft außerdem ein Spannungswellengetriebe und ein Verfahren zum Herstellen eines Spannungswellengetriebes.

Ein Spannungswellengetriebe besitzt zumeist ein starres, im Querschnitt kreisförmiges, innenverzahntes Zahnrad und ein flexibles außenverzahntes Zahnrad, das in dem von starren, innenverzahnten Zahnrad umgebenen Raumvolumen angeordnet ist. In dem außenverzahnten Zahnrad ist ein zumeist elliptischer Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnte Zahnrad rotieren zu können. Der Wellengenerator verbiegt das Wälzlager und das radialflexible, außenverzahnte Zahnrad zu einer elliptischen Form, um die Verzahnungen des innenverzahnten Zahnrades und des flexiblen außenverzahnten Zahnrades an jedem Ende der Ellipsen-Hauptachse miteinander in Eingriff zu bringen.

Das radialflexible, außenverzahnte Zahnrad weist eine geringere Anzahl von Zähnen auf, als das starre, innenverzahnte Zahnrad. Wenn der Wellengenerator rotiert, wälzt die Außenseite des außenverzahnten Zahnrades auf der Innenseite des innenverzahnten, starren Zahnrades ab, wobei die Zähne des flexiblen außenverzahnten Zahnrades an gegenüberliegenden Seiten umlaufend in und außer Eingriff mit den Zähnen des starren innenverzahnten Zahnrades gelangen. Aufgrund des Unterschiedes der Zähnezahlen kommt es zu einer Relativdrehung des radialflexiblen, außenverzahnten Zahnrades relativ zu dem starren, innenverzahnten Zahnrad, wenn der Wellengenerator rotiert wird. Der Wellengenerator muss nicht zwingend elliptisch Ausgebildet sein. Vielmehr ist jede von der Kreisform abweichende Form möglich, die im Ergebnis den beschriebenen Eingriff der Verzahnung des flexiblen, außenverzahnten Zahnrades in die Verzahnung des innenverzahnten Zahnrades bewirkt. Auch ist es möglich, den Wellengenerator derart auszubilden, dass die Verzahnung des radialflexiblen, außenverzahnten Zahnrades an drei oder mehr stellen in die Verzahnung des innenverzahnten Zahnrades eingreift.

Bei der Herstellung eines Spannungswellengetriebes besteht eine Schwierigkeit darin, das radialflexible Wälzlager auf den Lagersitz des Wellengenerators aufzubringen.

Es ist daher die Aufgabe der vorliegenden Erfindung, einen Wellengenerator für ein Spannungswellengetriebe anzugeben, der ein schnelles und effizientes Montieren eines radialflexiblen Wälzlagers ermöglicht.

Die Aufgabe wird durch einen Wellengenerator gelöst, der dadurch gekennzeichnet ist, dass der Wellengenerator einen sich in axialer Richtung an den Hauptabschnitt anschließenden und in einer Richtung von dem Hauptabschnitt weg verjüngenden Kegelabschnitt aufweist.

In erfindungsgemäßer Weise wurde erkannt, dass ein Hauptproblem beim Aufziehen des radialflexiblen Wälzlagers auf den Wellengenerator darin besteht, dass das Wälzlager nach seiner Herstellung eine im Querschnitt kreisrunde Form aufweist, während der Lagersitz des Wellengenerators im Querschnitt eine von der Kreisform abweichende Form aufweist. Der sich an den Hauptabschnitt anschließende Kegelabschnitt ermöglicht es, ein Wälzlager zunächst axial und insbesondere ohne dieses radial zu verformen, auf den Kegelabschnitt aufzustecken. Anschließend kann das Wälzlager auf den Lagersitz des mit dem Kegelabschnitt verbundenen Hauptabschnitts in axialer Richtung aufgeschoben werden, wobei das Wälzlager radial automatisch die erforderliche Form annimmt. Die Mantelfläche des Kegelabschnitts fungiert beim Aufschieben als Führungsfläche.

Vorzugsweise ist der Hauptabschnitt wenigsten in einen Teilbereich, der den Lagersitz beinhaltet, als gerader Zylinder mit einer von einer Kreisscheibe verschiedenen Grundform, beispielsweise einer ovalen oder elliptischen Grundform, ausgebildet. Bei einem geraden Zylinder steht die Mantelfläche stets senkrecht zu den Grundflächen, was vorteilhaft ist, damit die Mantelfläche den Lagersitz bereitstellen kann.

Der sich an den Hauptabschnitt anschließende Kegelabschnitt kann als Kegel oder als Kegelstumpf ausgebildet sein. Insbesondere kann der Kegelabschnitt als gerader Kegel oder als gerader Kegelstumpf ausgebildet sein. Hierdurch wird eine Unwucht vermieden, wenn der Wellengenerator rotiert wird. Beispielsweise ist ein gerader Ellipsenkegel ein Kegel mit einer elliptischen Grundfläche, bei dem eine senkrecht durch den Ellipsenmittelpunkt verlaufende Gerade auch durch die Kegelspitze verläuft. Ein Abschnitt eines solchen geraden Ellipsenkegels, der die Kegelspitze nicht umfasst ist, ist ein gerader Ellipsenkegelstumpf.

Vorzugsweise weist die dem Hauptabschnitt zugewandte Grundfläche des Kegelabschnitts dieselbe Form und/oder dieselbe Größe auf, wie die Grundfläche des Hauptabschnitts, insbesondere wie die Grundfläche des Teilbereichs des Hauptabschnitts, der den Lagersitz beinhaltet. Darüber hinaus ist es von Vorteil, wenn die dem Hauptabschnitt zugewandte Grundfläche des Kegelabschnitts parallel zur Grundfläche des Hauptabschnitts und/oder zur Grundfläche des Teilbereichs des Hauptabschnitts, der den Lagersitz beinhaltet, angeordnet ist.

Bei einer ganz besonders vorteilhaften Ausführung ist der Kegelabschnitt als Kegelstumpf ausgebildet, wobei der Außenumfang der dem Hauptabschnitt abgewandten Grundfläche des Kegelabschnitts kreisrund ist. Eine solche Ausführung hat den ganz besonderen Vorteil, dass ein nach seiner Herstellung in aller Regel kreisrundes Wälzlager einfach auf das freie Ende des Kegelabschnitts aufgesteckt werden kann. Vorzugsweise ist der Umfang der der Hauptfläche abgewandten Grundfläche wesentlich kleiner, als der Umfang des Lagersitzes und damit kleiner als der Innenumfang des Innenrings eines aufzuschiebenden Wälzlagers, so dass das Wälzlager einfach auf das freie Ende des Kegelstumpfs aufgesteckt werden kann, ohne dieses weiten oder verformen zu müssen.

Alternativ ist es auch möglich, dass der Kegelabschnitt als Kegelstumpf ausgebildet ist, wobei der Außenumfang der dem Hauptabschnitt abgewandten Grundfläche des Kegelabschnitts eine von der Kreisform abweichende Form aufweist. Hierbei kann insbesondere vorgesehen sein, dass der Außenumfang der dem Hauptabschnitt abgewandten Grundfläche des Kegelstumpfs dieselbe Form aufweist, wie der Außenumfang der Grundfläche des Hauptabschnitts und/oder wie der Außenumfang der Grundfläche des Teilbereichs des Hauptabschnitts, der den Lagersitz beinhaltet.

Allerdings ist die dem Hauptabschnitt abgewandte Grundfläche des Kegelstumpfs vorzugsweise kleiner als die Grundfläche des Hauptabschnitts, der den Lagersitz beinhaltet, damit das nach seiner Herstellung zunächst kreisrunde radialflexible Wälzlager ohne dieses weiten oder verformen zu müssen auf das freie Ende des Kegelstumpfs aufgesteckt werden kann. Vorzugsweise ist der größte Radialdurchmesser des freien Endes des Kegelstumpfes kleiner als der Innendurchmesser des Innenrings des aufzuschiebenden radialflexiblen Wälzlagers.

Der Außenumfang der dem Hauptabschnitt abgewandten Grundfläche des Kegelabschnitts kann oval, insbesondere elliptisch ausgebildet sein.

Im Rahmen dieser Anmeldung sind insbesondere bei einer elliptisch ausgebildeten Ausführung die charakteristischen Radien (größter Radius und kleinster Radius) der Ellipse als große und kleine Halbachsen bezeichnet, wobei mit diesen Begriffen in analoger Weise auch der größte bzw. der kleinste Radius von Ausführungen des Wellengenerators bezeichnet sind, die zwar oval, aber nicht elliptisch ausgebildet sind. Mit "Richtung des größten Durchmessers" ist die Richtung gemeint, die parallel zum größten Durchmesser einer elliptisch oder oval ausgebildeten Ausführung verläuft. Mit "Richtung des kleinsten Durchmessers" ist die Richtung gemeint, die parallel zum kleinsten Durchmesser einer elliptisch oder oval ausgebildeten Ausführung verläuft.

Bei einer ganz besonders vorteilhaften Ausführung geht die Mantelfläche des Hauptabschnitts stetig in die Mantelfläche des Kegelabschnitts über. Auf diese Weise ist ein sicheres und zuverlässiges Aufschieben des Wälzlagers auf den Lagersitz des Hauptabschnitts gewährleistet. Zu diesem Zweck kann - alternativ oder zusätzlich - vorteilhaft außerdem vorgesehen sein, dass die dem Kegelabschnitt zugewandte Grundfläche des Hauptabschnitts und die dem Hauptabschnitt zugewandte Grundfläche des Kegelabschnitts zueinander deckungsgleich ausgerichtet sind und/oder dieselbe Drehausrichtung aufweisen. Insbesondere ist es von Vorteil, wenn die große Halbachse der dem Kegelabschnitt zugewandten Grundfläche des Hauptabschnitts und die große Halbachse der dem Hauptabschnitt zugewandten Grundfläche des Kegelabschnitts parallel zueinander ausgerichtet sind und/oder wenn die kleine Halbachse der dem Kegelabschnitt zugewandten Grundfläche des Hauptabschnitts und die kleine Halbachse der dem Hauptabschnitt zugewandten Grundfläche des Kegelabschnitts parallel zueinander ausgerichtet sind.

Alternativ oder zusätzlich kann auch vorgesehen sein, dass eine Richtung des größten Durchmessers der dem Kegelabschnitt zugewandten Grundfläche des Hauptabschnitts und eine Richtung des größten Durchmessers der dem Hauptabschnitt zugewandten Grundfläche des Kegelabschnitts parallel zueinander ausgereichtet sind und/oder dass eine Richtung des kleinsten Durchmessers der dem Kegelabschnitt zugwandten Grundfläche des Hauptabschnitts und eine Richtung des kleinsten Durchmessers der dem Hauptabschnitt zugewandten Grundfläche des Kegelabschnitts parallel zueinander ausgereichtet sind.

Bei einer besonderen Ausführung weist der Hauptabschnitt einen den Lagersitz in axialer Richtung begrenzenden Axialanschlag auf. Der Axialanschlag kann beispielsweise als umlaufender Anschlagring ausgebildet sein. Insbesondere kann der Axialanschlag gemeinsam einstückig mit dem übrigen Teilen des Wellengenerators und/oder mit den übrigen Teilen des Hauptabschnitts aus demselben Stück Halbzeug hergestellt sein.

Der Axialanschlag kann vorteilhaft im Querschnitt eine kreisförmige Außenkontur aufweisen. Es ist alternativ jedoch auch möglich, dass der Axialanschlag im Querschnitt eine von der Kreisform abweichende Außenkontur aufweist. Eine solche Ausführung hat den weiter unten noch im Detail beschriebenen Vorteil, dass er zur drehrichtigen Anordnung eines Halteelements für den Kegelabschnitt dienen kann. Insbesondere kann die Außenkontur des Querschnitts des Axialanschlags dieselbe Form, insbesondere jedoch eine andere Größe, aufweisen, wie die Außenkontur des Querschnitts des Lagersitzes. Es ist auch möglich, dass die Außenkontur des Querschnitts des Axialanschlags dieselbe Form aufweist, wie die Außenkontur einer Grundfläche des Kegelabschnitts. Insbesondere kann die Außenkontur des Querschnitts des Axialanschlags oval und ganz insbesondere elliptisch ausgebildet sein.

Der Axialanschlag dient insbesondere dazu, den Aufschiebeweg des Wälzlagers auf den Lagersitz zu begrenzen. Insbesondere kann vorteilhaft vorgesehen sein, dass der Vorgang des Aufschiebens des radialflexiblen Wälzlagers auf den Lagersitz beendet wird, sobald das Wälzlager, insbesondere ein Innenring des Wälzlagers, den Axialanschlag erreicht hat.

Bei einer besonderen Ausführung weist der Wellengenerator eine an den Lagersitz angrenzende, umlaufende Nut für einen Sicherungsring auf. Eine solche Ausführung hat den besonderen Vorteil, dass nach einem Aufschieben des Wälzlagers auf den Lagersitz, das axial entlang einer Aufschieberichtung erfolgt, auf der dem Axialanschlag abgewandten Seite des Wälzlagers ein Sicherungsring, beispielsweise ein geschlitzter Federring, als weiterer Axialanschlag angebracht werden kann, der eine Bewegung des radialflexiblen Wälzlagers entgegengesetzt zu der Aufschieberichtung, insbesondere bei späteren Betrieb des Wellengenerators als Teil eines Spannungswellengetriebes, verhindert.

Bei einer besonders robusten Ausführung sind der Hauptabschnitt und der Kegelabschnitt gemeinsam einstückig aus demselben Stück Halbzeug hergestellt. Insbesondere bei einer solchen Ausführung verbleibt der Kegelabschnitt bei einem späteren Betrieb eines Spannungswellengetriebes als Teil des Wellengenerators im Spannungswellengetriebe und kann dort, nach einem eigenständigen und unabhängigen Erfindungsgedanken wenigstens eine weitere Funktion wahrnehmen. Insbesondere bei einer solchen Ausführung kann der Kegelabschnitt eine Nut für einen Sicherungsring aufweisen. Alternativ oder zusätzlich ist es auch möglich, dass der Kegelabschnitt nach dem Aufschieben des Wälzlagers als Träger für eine Dichtung für das Wälzlager fungiert oder einen Anschlagbund für weitere Bauteile trägt. Es ist, alternativ oder zusätzlich, auch möglich, dass der Kegelabschnitt eine Fläche für DMC-Markierungscode und/oder eine Ankoppelfläche für dritte Elemente aufweist.

Der erfindungsgemäße Wellengenerator kann alternativ auch mehrteilig ausgebildet sein, wobei insbesondere wenigstens ein Teil durch den Hauptabschnitt und ein anderer Teil durch den Kegelabschnitt gebildet sein kann.

Die mehreren Teile des Wellengenerators, insbesondere der Hauptabschnitt und der Kegelabschnitt können unlösbar, insbesondere stoffschlüssig, miteinander verbunden sein.

Alternativ können die Teile, insbesondere der Hauptabschnitt und der Kegelabschnitt, auch lösbar miteinander verbunden sein, was den Vorteil hat, den Kegelabschnitt, insbesondere nach dem Aufschieben eines oder mehrerer radialflexibler Wälzlager auf den Lagersitz, wieder entfernen zu können. Dies beispielsweise, um den Kegelabschnitt anschließend an einen anderen Hauptabschnitt zum Aufschieben eines radialflexiblen Wälzlagers auf den anderen Hauptabschnitt verwenden zu können.

Es ist jedoch wichtig zu gewährleisten, dass der Kegelabschnitt stets drehrichtig mit dem Hauptabschnitt verbunden wird, um ein effizientes und störungsfreies Aufschieben eines radialflexiblen Wälzlagers zu ermöglichen. Insbesondere hierzu kann beispielsweise vorgesehen sein, dass der Hauptabschnitt ein Steckelement aufweist und dass der Kegelabschnitt ein Gegensteckelement aufweist, wobei das Steckelement und das Gegensteckelement formkomplementär ausgebildet sind.

Insbesondere können das Steckelement und das Gegensteckelement vorteilhaft derart ausgebildet sein, dass der Hauptabschnitt zu dem Kegelabschnitt nach Herstellen der Steckverbindung automatisch derart ausgerichtet ist, dass die dem Kegelabschnitt zugewandte Grundfläche des Hauptabschnitts und die dem Hauptabschnitt zugewandte Grundfläche des Kegelabschnitts zueinander deckungsgleich ausgerichtet sind und/oder dieselbe Drehausrichtung aufweisen und/oder parallel zueinander ausgerichtet sind.

Insbesondere kann vorteilhaft vorgesehen sein, dass das Steckelement und das Gegensteckelement derart ausgebildet sind, dass der Hauptabschnitt zu dem Kegelabschnitt nach Herstellen der Steckverbindung automatisch derart ausgerichtet ist, dass eine große Halbachse der dem Kegelabschnitt zugewandten Grundfläche des Hauptabschnitts und eine große Halbachse der dem Hauptabschnitt zugewandte Grundfläche des Kegelabschnitts parallel zueinander ausgerichtet sind und/oder dass eine kleine Halbachse der dem Kegelabschnitt zugewandten Grundfläche des Hauptabschnitts und eine kleine Halbachse der dem Hauptabschnitt zugewandten Grundfläche des Kegelabschnitts zueinander parallel ausgerichtet sind.

Alternativ oder zusätzlich kann auch vorgesehen sein, dass Steckelement und das Gegensteckelement derart ausgebildet sind, dass der Hauptabschnitt zu dem Kegelabschnitt nach Herstellen der Steckverbindung automatisch derart ausgerichtet ist, dass eine Richtung des größten Durchmessers der dem Kegelabschnitt zugewandten Grundfläche des Hauptabschnitts und eine Richtung des größten Durchmessers der dem Hauptabschnitt zugewandten Grundfläche des Kegelabschnitts parallel zueinander ausgerichtet sind und/oder dass eine Richtung des kleinsten Durchmessers der dem Kegelabschnitt zugewandten Grundfläche des Hauptabschnitts und eine Richtung des kleinsten Durchmessers der dem Hauptabschnitt zugewandten Grundfläche des Kegelabschnitts parallel zueinander ausgerichtet sind.

Bei einer besonderen Ausführung ist das Steckelement auf der dem Kegelabschnitt zugewandten Grundfläche des Hauptabschnitts angeordnet. Es ist auch möglich, dass das Gegensteckelement auf der dem Hauptabschnitt zugewandten Grundfläche des Kegelabschnitts angeordnet ist.

Bei einer besonders vorteilhaften Ausführung weisen das Steckelement und/oder das Gegensteckelement im Querschnitt eine von der Kreisform abweichende Außenkontur auf. Insbesondere kann vorteilhaft vorgesehen sein, dass das Steckelement und/oder das Gegensteckelement im Querschnitt oval, insbesondere elliptisch ausgebildet sind. Eine solche Ausführung ermöglicht es vorteilhaft, schnell und effizient eine Steckverbindung zwischen dem Hauptabschnitt und dem Kegelabschnitt herzustellen. Insbesondere hierbei kann vorteilhaft zusätzlich vorgesehen sein, dass das Steckelement und das Gegensteckelement konisch ausgebildet sind, um eine radiale Selbstzentrierung beim Zusammenstecken zu erreichen.

Es ist auch möglich, dass das Steckelement und/oder das Gegensteckelement im Querschnitt eine andere Außenkontur aufweisen, als der Hauptabschnitt. Alternativ ist es auch möglich, dass das Steckelement und/oder das Gegensteckelement im Querschnitt die gleiche Außenkontur aufweisen, wie der Hauptabschnitt, wobei jedoch die Richtungen des größten Durchmessers verschieden sind, und/oder dass das Steckelement und/oder das Gegensteckelement im Querschnitt die gleiche Außenkontur aufweisen, wie der Hauptabschnitt, wobei jedoch die Richtungen des kleinsten Durchmessers verschieden sind.

Bei einer ganz besonders vorteilhaften Ausführung ist das Steckelement durch die Außenkontur des dem Kegelabschnitt abgewandten Grundfläche des Hauptabschnitts und/oder durch den Axialanschlag gebildet. Insbesondere bei einer solchen Ausführung kann ein Halteelement, das, insbesondere ausschließlich in einer bestimmten Drehausrichtung, mit dem Kegelabschnitt verbindbar ist oder verbunden ist, das Gegensteckelement aufweisen. Insbesondere kann das Halteelement vorübergehend mit dem Kegelabschnitt verbunden werden (und ist insoweit mit dem Kegelabschnitt verbindbar ausgebildet), bis das Wälzlager auf den Lagersitz aufgeschoben wurde.

Insbesondere bei einer Ausführung, bei der der Wellengenerator als Hohlwelle oder als Hohlrad ausgebildet ist, kann ein derartiges Halteelement an der dem Kegelabschnitt abgewandten Seite des Hauptabschnitts angeordnet und durch den Hauptabschnitt hindurch mit dem Kegelabschnitt verbunden werden, um den Kegelabschnitt an dem Hauptabschnitt, zumindest vorrübergehend, drehrichtig zu fixieren.

Ganz allgemein kann vorteilhaft vorgesehen sein, dass der Hauptabschnitt zwischen einem Halteelement und dem Kegelabschnitt eingespannt wird, um den Kegelabschnitt an dem Hauptabschnitt, zumindest vorrübergehend, zu fixieren. Hierbei kann vorgesehen sein, dass Mittel vorhanden sind, die eine Drehrichtige Ausrichtung des Kegelabschnitts, insbesondere durch eine Drehrichtige Ausrichtung des Halteelements, ermöglichen. Insoweit kann vorteilhaft vorgesehen sein, dass der Hauptabschnitt, das Haltelement und der Kegelabschnitt derart ausgebildet sind, dass der Hauptabschnitt zwischen dem Haltelement und dem Kegelabschnitt eingespannt werden kann, also einspannbar ist.

Von besonderem Vorteil ist ein Spannungswellengetriebe, das einen erfindungsgemäßen Wellengenerator oder wenigstens den Hauptabschnitt eines erfindungsgemäßen Wellengenerators, auf dessen Lagersitz ein radialflexibles Wälzlager unter Verwendung der Mantelfläche des Kegelabschnitts als Führungsfläche aufgepresst wurde, beinhaltet. Hierbei kann insbesondere vorgesehen sein, dass der Kegelabschnitt entfernte wurde und der Hauptabschnitt ohne den Kegelabschnitt in dem Spannungswellengetriebe verbaut ist. Der in dem Spannungswellengetriebe verbaute Hauptabschnitt kann vorteilhaft jedoch nach wie vor ein Steckelement aufweisen, das beim Aufpressen des Wälzlagers mit einem Gegensteckelement des Kegelabschnitts oder einem Gegensteckelement eines Haltelements zum vorübergehenden Befestigen des Kegelabschnitts in Wirkverbindung stand.

Insbesondere kann vorteilhaft vorgesehen sein, dass das Spannungswellengetriebe wenigstens einen, in der oben beschriebenen Weise, auf den Lagersitz aufgepresstes Wälzlager aufweist. Insbesondere kann vorteilhaft auch vorgesehen sein, dass auf den Lagersitz über den Kegelabschnitt - simultan oder sequenziell - zwei oder mehr Wälzlager aufgepresst werden.

Insbesondere kann vorteilhaft vorgesehen sein, dass der Kegelabschnitt des Wellengenerators und ggf. weitere Bauteile die zur vorübergehenden Befestigung des Kegelabschnitts an den Hauptabschnitt dienten, nach dem Aufschieben des Wälzlagers auf den Lagersitz entfernt werden und der Wellengenerator ohne den Kegelabschnitt und ohne die ggf. vorhandenen weiteren Bauteile in dem herzustellenden Spannungswellengetriebe verbaut wird.

Ein aufzupressendes Wälzlager kann insbesondere als Kugellager mit einem Innenring und einem Außenring ausgebildet sein. Der Innenring kann vorteilhaft derart dimensioniert sein, dass er nach dem Aufschieben auf den Lagersitz in Tangentialrichtung ausschließlich durch Reibschluss gehalten ist. Insoweit kann vorteilhaft vorgesehen sein, dass der Innenumfang des Innenrings des Wälzlagers dem Außenumfang des Lagersitzes entspricht.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1 bis 3: ein erstes Ausführungsbeispiel eines erfindungsgemäßen Wellengenerators in unterschiedlichen Ansichten und in unterschiedlichen Phasen beim Aufschieben eines radialflexiblen Wälzlagers,
- Fig. 4 bis 6: ein zweites Ausführungsbeispiel eines erfindungsgemäßen Wellengenerators in unterschiedlichen Ansichten und in unterschiedlichen Phasen beim Aufschieben eines radialflexiblen Wälzlagers,
- Fig. 7 bis 9: ein drittes Ausführungsbeispiel eines erfindungsgemäßen Wellengenerators in unterschiedlichen Ansichten und in unterschiedlichen Phasen beim Aufschieben von zwei radialflexiblen Wälzlagern,
- Fig. 10 bis 12: ein viertes Ausführungsbeispiel eines erfindungsgemäßen Wellengenerators in unterschiedlichen Ansichten und in unterschiedlichen Phasen beim Aufschieben von zwei radialflexiblen Wälzlagern,
- Fig. 13 bis 16: ein fünftes Ausführungsbeispiel eines erfindungsgemäßen Wellengenerators in unterschiedlichen Ansichten und in unterschiedlichen Phasen vor, beim und nach dem Aufschieben eines radialflexiblen Wälzlagers, wobei die Figuren 13 und 16 das Ausführungsbeispiel ohne den sich verjüngenden Kegelabschnitt zeigen, und
- Fig. 17 bis 20: ein sechstes Ausführungsbeispiel eines erfindungsgemäßen Wellengenerators in unterschiedlichen Ansichten und in unterschiedlichen Phasen vor, beim und nach dem Aufschieben eines radialflexiblen Wälzlagers, wobei die Figur 17 das Ausführungsbeispiel ohne den sich verjüngenden Kegelabschnitt zeigt.

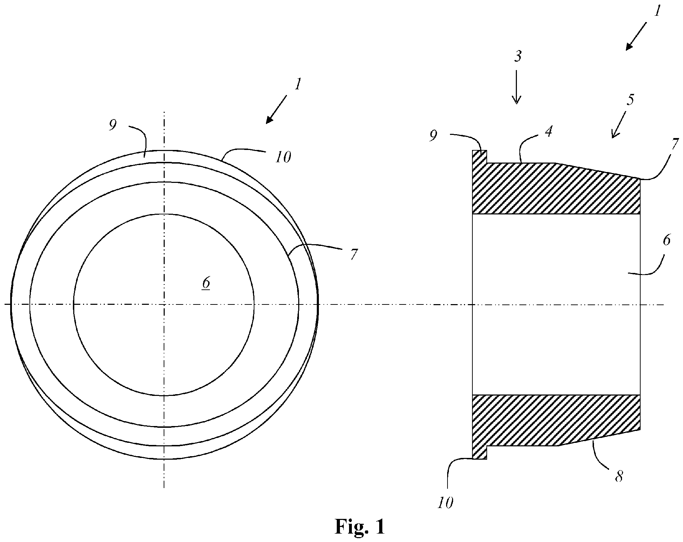

Die Figuren 1 bis 3 zeigen ein erstes Ausführungsbeispiel eines erfindungsgemäßen Wellengenerators 1 in unterschiedlichen Ansichten und in unterschiedlichen Phasen beim Aufschieben eines radialflexiblen Wälzlagers 2.

Figur 1 zeigt in der rechten Darstellung einen Querschnitt entlang der Axialrichtung durch den Wellengenerator 1. Der Wellengenerator 1 weist in einem Hauptabschnitt 3 einen Lagersitz 4 für ein radialflexibles Wälzlager 2 auf. Darüber hinaus weist der Wellengenerator 1 einen sich in axialer Richtung an den Hauptabschnitt 3 anschließenden und in einer Richtung von dem Hauptabschnitt 3 weg verjüngenden Kegelabschnitt 5 auf. Der Wellengenerator 1 ist als Hohlwelle ausgebildet und weist demgemäß eine in Axialrichtung verlaufende Durchgangsbohrung 6 auf.

Der Hauptabschnitt 3 ist in dem Teilbereich, der den Lagersitz 4 beinhaltet, als gerader Zylinder mit einer von einer Kreisscheibe verschiedenen Grundform, nämlich mit einer elliptischen Grundform, ausgebildet.

Der Kegelabschnitt 5 ist konkret als gerader Kegelstumpf ausgebildet, wobei die dem Hauptabschnitt 3 zugewandte Grundfläche des Kegelabschnitts dieselbe elliptische Form und dieselbe Größe aufweist, wie die Grundfläche des Hauptabschnitts 3 in dem Teilbereich, in dem der Lagersitz 4 angeordnet ist. Der Außenumfang 7 der dem Hauptabschnitt 3 abgewandten Grundfläche des Kegelabschnitts 5 ist bei diesem Ausführungsbeispiel kreisrund ausgebildet. Auch die Durchgangsbohrung 6 ist im Querschnitt kreisrund ausgebildet.

Ausgehend vom freien Ende des Kegelabschnitts 5 hin zu dem, dem Hauptabschnitt 3 zugewandten Ende des Kegelabschnitts 5 verändert sich die Querschnittsform der Außenkontur der Mantelfläche 8 des Kegelabschnitts 5 von einer Kreisform zu einer Ellipsenform. Die Mantelfläche 8 des Kegelabschnitts 5 geht stetig in die Mantelfläche des den Lagersitz 4 aufweisenden Teil des Hauptabschnitts 3 über.

Der Hauptabschnitt 3 weist einen den Lagersitz 4 in axialer Richtung begrenzenden Axialanschlag 9 auf. Der Axialanschlag 9 weist bei diesem Ausführungsbeispiel eine im Querschnitt kreisförmige Außenkontur 10 auf.

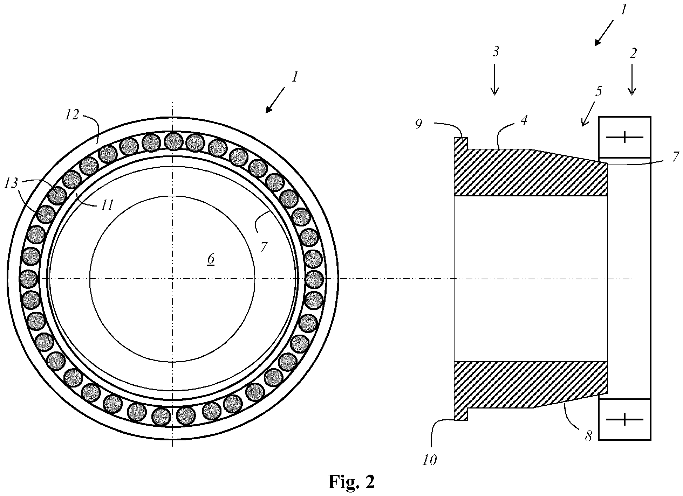

Figur 2 zeigt das erste Ausführungsbeispiel eines erfindungsgemäßen Wellengenerators 1 mit einem lose auf das freie Ende des Kegelabschnitts 5 aufgestecktem, radialflexiblen Wälzlager 2, das beispielsweise als Kugellager ausgebildet sein kann. Das radialflexible Wälzlager 2 weist bei diesem Ausführungsbeispiel einen Innenring 11 und einen Außenring 12 auf. Zwischen dem Innenring 11 und dem Außenring 12 sind Lagerkugeln 13 angeordnet.

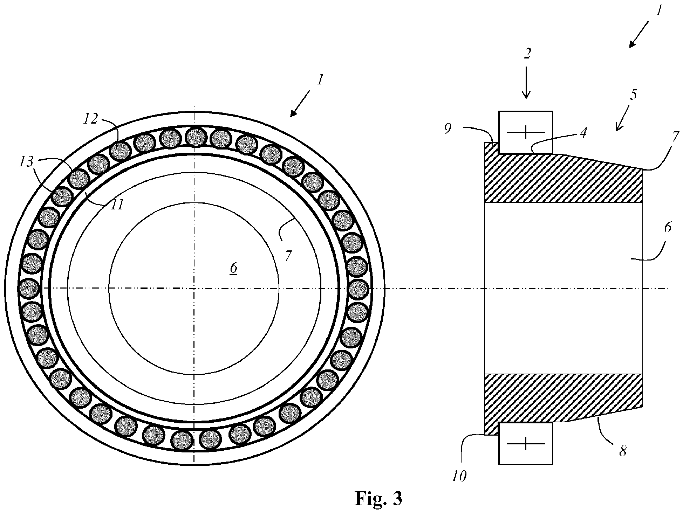

In einem nächsten Arbeitsschritt wird das radialflexible Wälzlager 2 über die Mantelfläche 8 des Kegelabschnitts 5, die als Führungsfläche dient, auf den Hauptabschnitt 3, nämlich auf den Teil des Hauptabschnitts 3, der den Lagersitz 4 aufweist, aufgeschoben, bis das radialflexible Wälzlager 2 an den Axialanschlag 9 anstößt. Hierbei wird das radialflexible Wälzlager 2 von einer anfänglich kreisrunden Form in eine Ellipsenform verformt. Schließlich ist das aufgeschobene radialflexible Wälzlager 2 reibschlüssig mit dem Hauptabschnitt 3 des Wellengenerators 1 verbunden. Dies ist in Figur 3 dargestellt.

Während die jeweils rechten Darstellungen der Figuren 1 bis 3 einen Querschnitt entlang der Axialrichtung zeigen, zeigen die jeweils linken Darstellungen der Figuren 1 bis 3 eine Draufsicht entlang der axialen Aufschieberichtung.

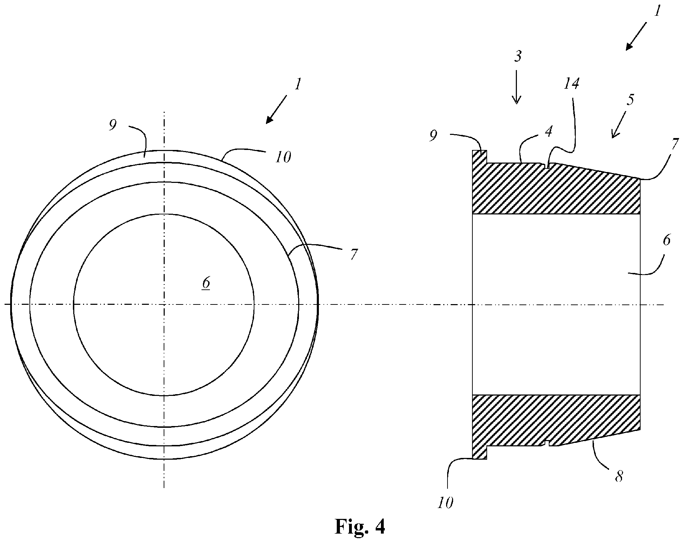

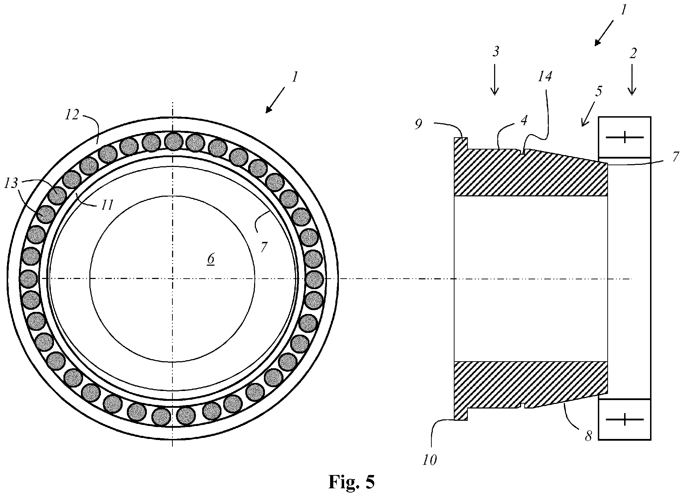

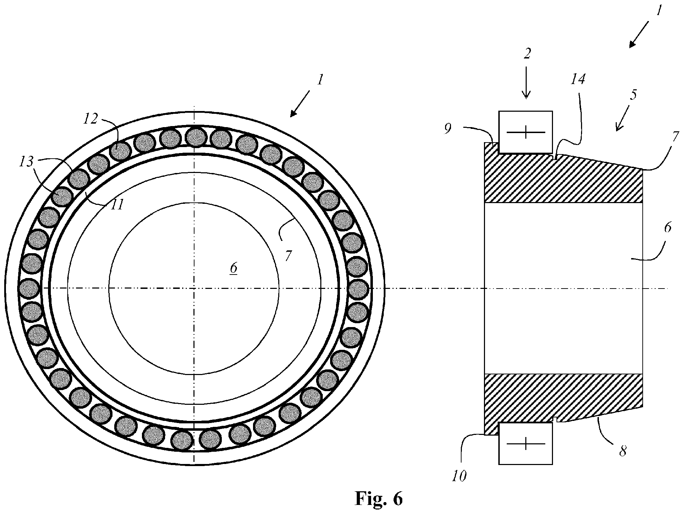

Die Figuren 4 bis 6 zeigen ein zweites Ausführungsbeispiel eines erfindungsgemäßen Wellengenerators 1 in unterschiedlichen Ansichten und in unterschiedlichen Phasen beim Aufschieben eines radialflexiblen Wälzlagers 2. Diese Ausführung unterscheidet sich von der in den Figuren 1 bis 3 dargestellten Ausführung dadurch, dass sie eine an den Lagersitz 4 angrenzende umlaufende Nut 14 für einen (nicht dargestellten) Sicherungsring aufweist. Nach dem Aufschieben eines radialflexiblen Wälzlagers 2 auf den Lagersitz 4 kann ein Sicherungsring, beispielsweise in Form eines geschlitzten Federrings, in die Nut eingefügt werden. Hierzu kann der Sicherungsring zunächst auf das freie Ende des Kegelabschnitts 5 aufgesteckt und dann soweit aufgeschoben werden, bis er in die Nut 14 einrastet. Hierbei kann die Mantelfläche 8 des Kegelabschnitts 5 vorteilhaft als Führungsfläche fungieren. Der Sicherungsring verhindert, dass das radialflexible Wälzlager 2, insbesondere beim späteren Betrieb in einem Spannungswellengetriebe, entgegen der Aufschieberichtung von dem Lagersitz 4 rutscht.

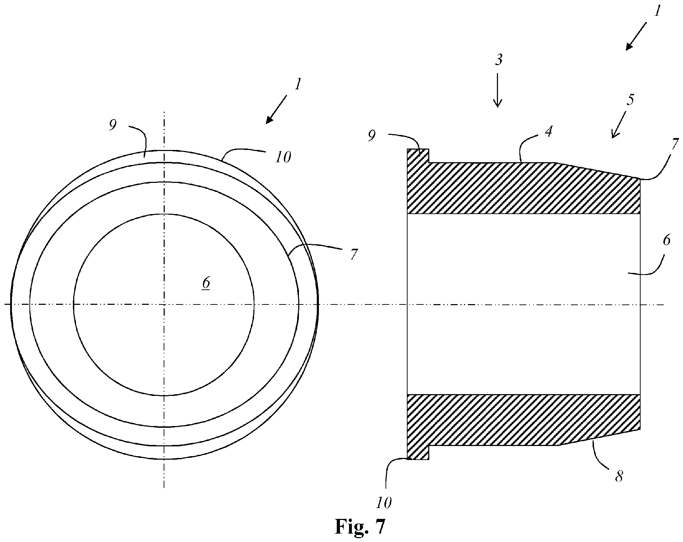

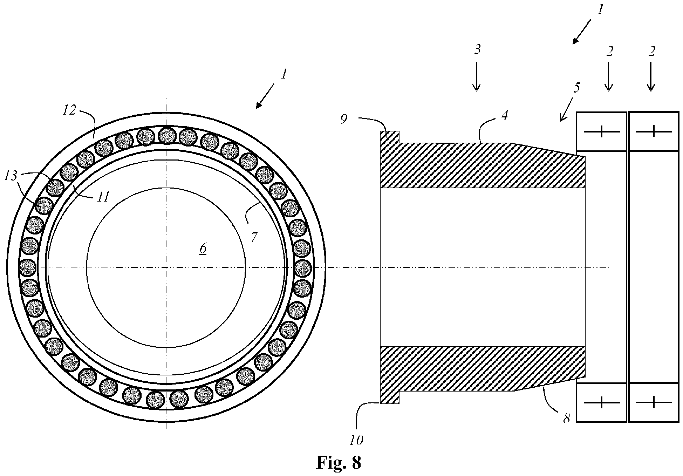

Die Figuren 7 bis 9 zeigen ein drittes Ausführungsbeispiel eines erfindungsgemäßen Wellengenerators in unterschiedlichen Ansichten und in unterschiedlichen Phasen beim Aufschieben zweier radialflexibler Wälzlager 2. Dieses Ausführungsbeispiel unterscheidet sich von dem in den Figuren 1 bis 3 dargestellten Ausführungsbeispiel durch einen axial breiteren Lagersitz für zwei zueinander parallele radialflexible Wälzlager 2.

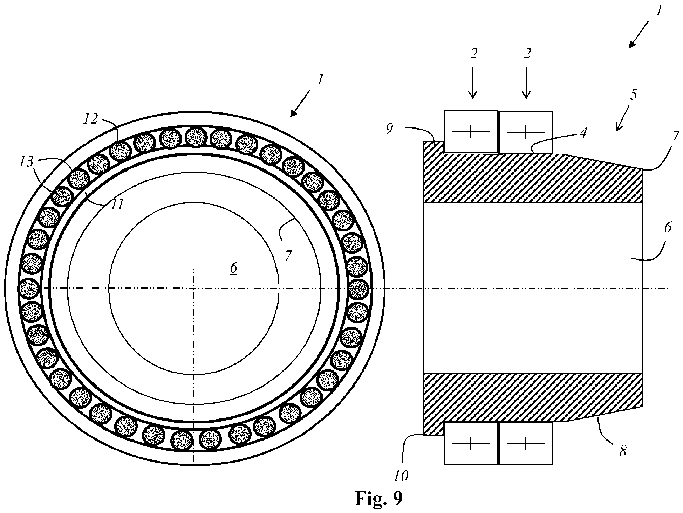

Die beiden radialflexiblen Wälzlager 2 können beispielsweise simultan aufgeschoben werden. Hierzu werden die beiden radialflexiblen Wälzlager 2 zunächst auf das freie Ende des Kegelabschnitts 5 aufgesteckt und anschließend gemeinsam, die Mantelfläche 8 des Kegelabschnitts 5 als Führungsfläche nutzend, auf den Hauptabschnitt 3 aufgeschoben, bis der Axialanschlag 9 erreicht ist. Diese Situation ist in Figur 9 dargestellt.

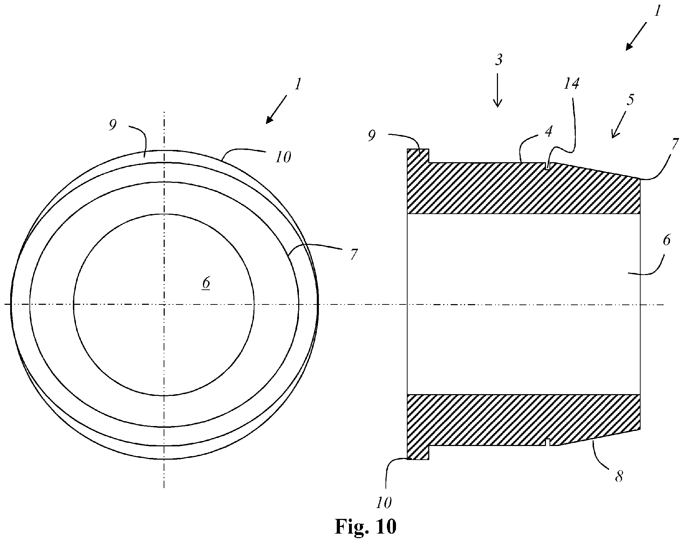

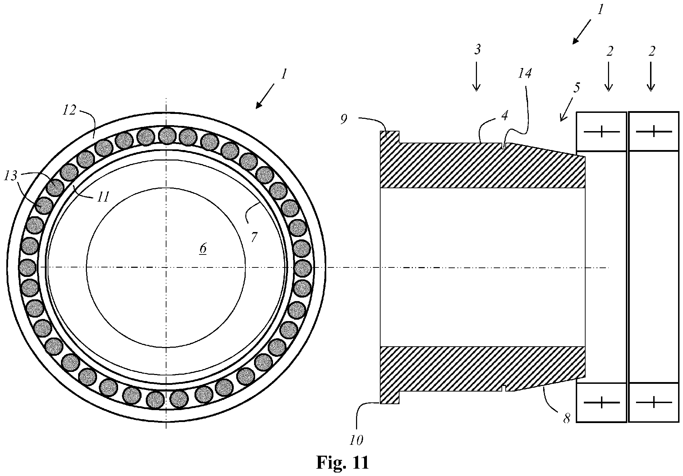

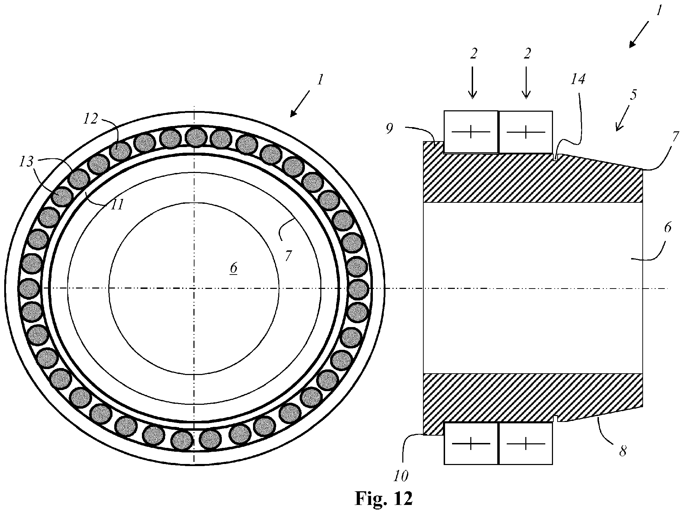

Die Figuren 10 bis 12 zeigen ein viertes Ausführungsbeispiel eines erfindungsgemäßen Wellengenerators 1 in unterschiedlichen Ansichten und in unterschiedlichen Phasen beim Aufschieben zweier radialflexibler Wälzlager, wobei sich dieses Ausführungsbeispiel von dem in den Figuren 7 bis 9 dargestellten Ausführungsbeispiel dadurch unterscheidet, dass zwischen dem Lagersitz 4 und dem Kegelabschnitt 5 eine Nut 14 für einen Sicherungsring vorhanden ist.

Nach dem Aufschieben der radialflexiblen Wälzlager 2 auf den Lagersitz 4 kann ein Sicherungsring, beispielsweise in Form eines geschlitzten Federrings, in die Nut eingefügt werden. Hierzu kann der Sicherungsring zunächst auf das freie Ende des Kegelabschnitts 5 aufgesteckt und dann soweit aufgeschoben werden, bis er in die Nut 14 einrastet. Hierbei kann die Mantelfläche 8 des Kegelabschnitts 5 vorteilhaft als Führungsfläche fungieren. Der Sicherungsring verhindert, dass die radialflexiblen Wälzlager 2, insbesondere beim späteren Betrieb in einem Spannungswellengetriebe, entgegen der Aufschieberichtung von dem Lagersitz 4 rutschen.

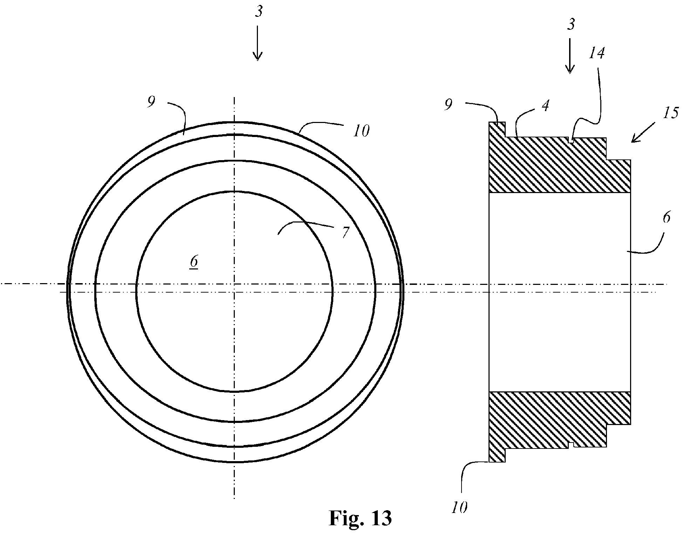

Die Figuren 13 bis 16 zeigen ein fünftes Ausführungsbeispiel eines erfindungsgemäßen Wellengenerators 1 in unterschiedlichen Phasen vor, beim und nach dem Aufschieben eines radialflexiblen Wälzlagers 2.

Figur 13 zeigt den Hauptabschnitt 3 eines erfindungsgemäßen Wellengenerators 1. Der Hauptabschnitt 3 weist einen Lagersitz 4 für ein radialflexibles Wälzlager 2 auf, der in axialer Richtung durch einen Axialanschlag 9 begrenzt ist. Außerdem weist der Hauptabschnitt 3 axial neben dem Lagersitz 4 eine umlaufende Nut 14 für einen (nicht dargestellten) Sicherungsring auf.

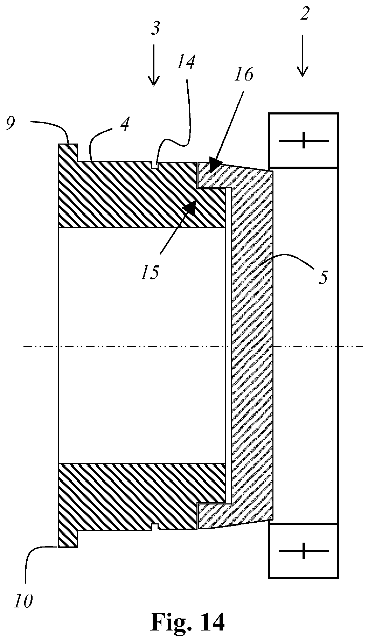

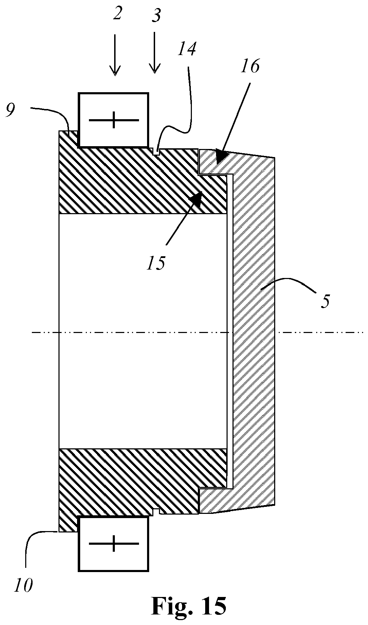

Darüber hinaus weist der Hauptabschnitt 3 ein im Querschnitt ovales Steckelement 15 auf, das dazu ausgebildet ist, mit einem formkomplementär ausgebildeten Gegensteckelement 16 des Kegelabschnitts 5, der lediglich in den Figuren 14 und 15 gezeigt ist, zusammenzuwirken.

Figur 14 zeigt den mehrteilig ausgebildeten Wellengenerator 1 in zusammengestecktem Zustand. Das Steckelement 15 und das Gegensteckelement 16 sind derart ausgebildet, dass der Hauptabschnitt 3 zu dem Kegelabschnitt 5 nach dem Herstellen der Steckverbindung automatisch derart ausgerichtet ist, dass die dem Kegelabschnitt 5 zugewandte Grundfläche des Hauptabschnitts 3 und die dem Hauptabschnitt 3 zugewandte Grundfläche des Kegelabschnitts 5 zueinander deckungsgleich ausgerichtet und angeordnet sind. Hierdurch ist gewährleistet, dass die Mantelfläche 8 des Kegelabschnitts 5 stetig in die den Lagersitz 4 beinhaltende Außenumfangsfläche des Hauptabschnitts 3 übergeht.

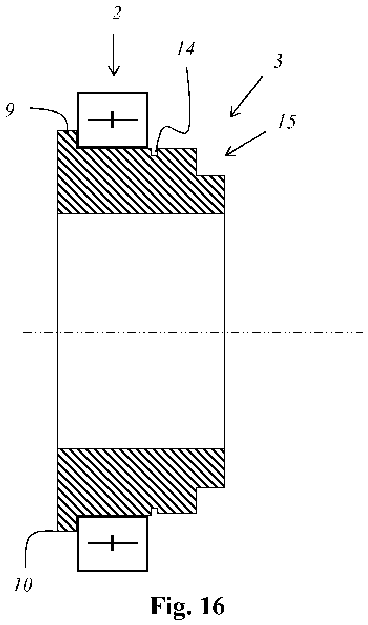

Figur 14 zeigt außerdem ein aufzuschiebendes radialflexibles Wälzlager 2, das auch bei dieser Ausführung in der oben bereits mehrfach beschriebenen Form zunächst auf das freie Ende des Kegelabschnitts 5 aufgesteckt wird. Anschließend erfolgt ein Aufschieben des radialflexiblen Wälzlagers 2 auf den Lagersitz 4 des Hauptabschnitts 3 bis zum Erreichen des Axialanschlags 9. Diese Situation ist in Figur 15 dargestellt. Nach dem Aufschieben des radialflexiblen Wälzlagers 2 kann der Kegelabschnitt 5 von dem Hauptabschnitt 3 getrennt werden, was in Figur 16 dargestellt ist, oder in der in der in Figur 15 dargestellten Form in einem Spannungswellengetriebe verwendet werden.

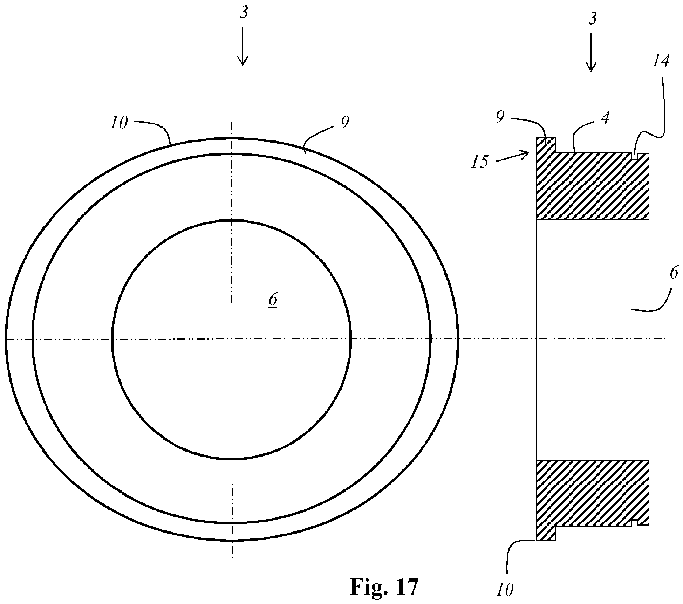

Die Figuren 17 bis 20 illustrieren ein sechstes Ausführungsbeispiel eines erfindungsgemäßen Wellengenerators in unterschiedlichen Phasen vor, beim und nach dem Aufschieben eines radialflexiblen Wälzlagers.

Figur 17 zeigt den Hauptabschnitt 3 eines mehrteiligen Wellengenerators 1, wobei der Kegelabschnitt in Figur 17 nicht dargestellt ist. Der Hauptabschnitt 3 weist einen Lagersitz 4 auf, an den einerseits ein Axialanschlag 9 und andererseits eine Nut 14 für einen Sicherungsring angrenzt. Der Hauptabschnitt 3 ist als Hohlwelle mit einer axialen Durchgangsbohrung 6 ausgebildet.

Der Teil des Hauptabschnitts 3, der den Lagersitz 4 aufweist, ist außen im Querschnitt elliptisch ausgebildet, was in der linken Darstellung der Figur 17 zu erkennen ist.

Der Axialanschlag 9 weist bei diesem Ausführungsbeispiel im Querschnitt eine von der Kreisform abweichende Außenkontur auf. Konkret ist die Außenkontur 10 des Axialanschlags 9 bei diesem Ausführungsbeispiel im Querschnitt elliptisch ausgebildet, was ebenfalls in der linken Darstellung der Figur 17 zu erkennen ist.

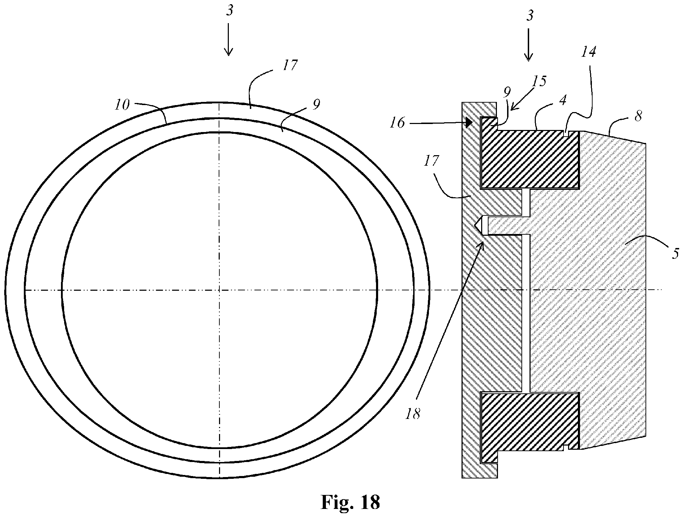

Bei diesem Ausführungsbeispiel bildet der Axialanschlag 9 ein Steckelement 15 für ein Halteelement 17 (dargestellt in den Figuren 18 bis 20), das auf seiner dem Hauptabschnitt 3 zugewandten Seite das Gegensteckelement 16, das eine von der Kreisform abweichende Innenkontur hat und das ein drehrichtiges Anbringen des Haltelements 17 an dem Hauptabschnitt 3 gewährleistet, aufweist. Konkret ist das Halteelement 17 formkomplementär zu der Außenseite des Axialanschlags 9 ausgebildet, so dass das Halteelement 17 nur in zwei zueinander äquivalenten Drehstellungen (aufgrund der Ellipsensymetrie) auf den Hauptabschnitt 3 aufgesteckt werden kann. Die Befestigung des Kegelabschnitts 5 erfolgt dadurch, dass der Hauptabschnitt 3 zwischen dem Halteelement 17 und dem Kegelabschnitt 5 angeordnet wird. Zum Verbinden des Kegelabschnitts 5 mit dem Halteelement 17 ist eine weitere Steckverbindung 18 vorhanden. Die Steckverbindung 18 ist zur axialen Mittelachse versetzt angeordnet, wodurch gewährleistet ist, dass der Kegelabschnitt 5 automatisch drehrichtig zu dem Halteelement und damit drehrichtig zu dem Hauptabschnitt 3 angeordnet wird. Auch bei diesem Ausführungsbeispiel geht die Mantelfläche 8 des Kegelabschnitts 5 stetig in eine Außenumfangsfläche, die den Lagersitz 4 beinhaltet, des Hauptabschnitts 3 über.

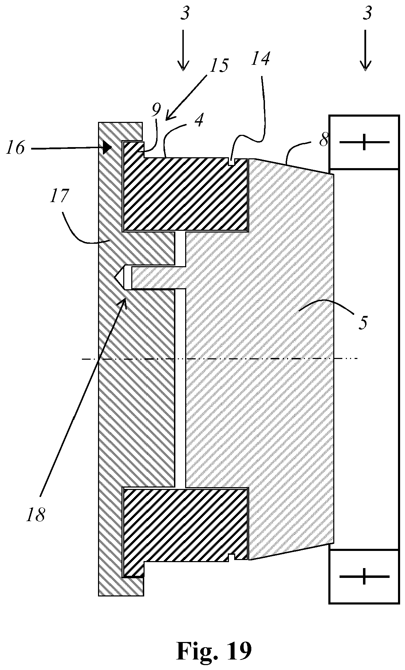

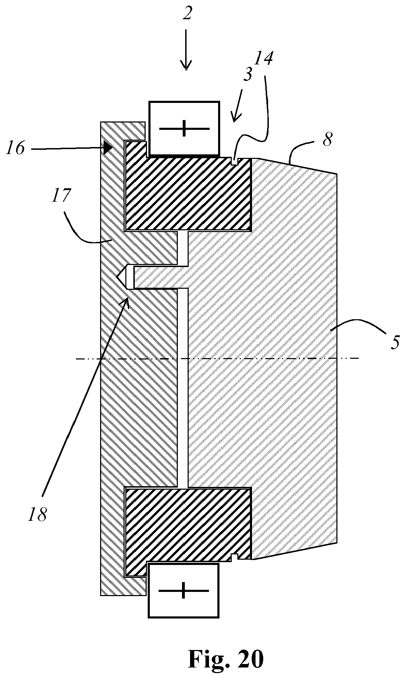

Das Aufschieben eines radialflexiblen Wälzlagers 2 geschieht in der oben bereits mehrfach beschriebenen Weise dergestalt, dass das radialflexible Wälzlager 2 zunächst auf das freie Ende des Kegelabschnitts 5 aufgesteckt wird, was in Figur 19 dargestellt ist. Anschließend erfolgt das Aufschieben des radialflexiblen Wälzlagers 2 auf den Hauptabschnitt 3, bis das radialflexible Wälzlager 2 den Axialanschlag 9 erreicht hat, was in Figur 20 dargestellt ist. Danach kann das Haltelement 17 und der Kegelabschnitt 5 entfernt werden oder der Wellengenerator in der in der in Figur 20 dargestellten Form in einem Spannungswellengetriebe verwendet werden.

Genauso wie bei dem in den Figuren 13 bis 16 dargestellten Ausführungsbeispiel wird auch bei diesem Ausführungsbeispiel lediglich der mit einem radialflexiblen Wälzlager 2 versehene Hauptabschnitt 3 in ein Spannungswellengetriebe eingebaut, während der Kegelabschnitt 5 zum Aufschieben eines radialflexiblen Wälzlagers 2 bei einem anderen Hauptabschnitt 3 wiederverwendet werden kann.

### Bezugszeichenliste:

- 1: Wellengenerator
- 2: Radialflexibles Wälzlager
- 3: Hauptabschnitt
- 4: Lagersitz
- 5: Kegelabschnitt
- 6: Durchgangsbohrung
- 7: Außenumfang
- 8: Mantelfläche
- 9: Axialanschlag
- 10: Außenkontur des Axialanschlags 9
- 11: Innenring
- 12: Außenring
- 13: Lagerkugeln
- 14: Umlaufende Nut
- 15: Steckelement
- 16: Gegensteckelement
- 17: Halteelement
- 18: Weitere Steckverbindung

## Patentansprüche

1. Wellengenerator (1) für ein Spannungswellengetriebe, der in einem Hauptabschnitt (3) einen Lagersitz (4) für ein radialflexibles Wälzlager (2) aufweist, **dadurch gekennzeichnet, dass** der Wellengenerator (1) einen sich in axialer Richtung an den Hauptabschnitt (3) anschließenden und in einer Richtung von dem Hauptabschnitt (3) weg verjüngenden Kegelabschnitt (5) aufweist.

2. Wellengenerator (1) nach Anspruch 1, **dadurch gekennzeichnet, dass**
a. der Hauptabschnitt (3) wenigstens in einem Teilbereich, der den Lagersitz (4) beinhaltet, als gerader Zylinder mit einer von einer Kreisscheibe verschiedenen Grundform ausgebildet ist, und/oder dass
b. der Hauptabschnitt (3) wenigstens in einem Teilbereich, der den Lagersitz (4) beinhaltet, als gerader Zylinder mit einer ovalen oder elliptischen Grundform ausgebildet ist, und/oder dass
c. der Kegelabschnitt (5) als Kegel oder als Kegelstumpf oder als gerade Kegel oder als gerader Kegelstumpf ausgebildet ist.

3. Wellengenerator (1) nach Anspruch 1 oder 2, **dadurch gekennzeichnet, dass**
a. die dem Hauptabschnitt (3) zugewandte Grundfläche des Kegelabschnitts (5) dieselbe Form und/oder dieselbe Größe aufweist, wie die Grundfläche des Hauptabschnitts (3) und/oder wie die Grundfläche eines Teilbereichs, der den Lagersitz (4) beinhaltet, und/oder dass
b. die dem Hauptabschnitt (3) zugewandte Grundfläche des Kegelabschnitts (5) parallel zur Grundfläche des Hauptabschnitts (3) und/oder parallel zur Grundfläche eines Teilbereichs, der den Lagersitz (4) beinhaltet, angeordnet ist, und/oder dass
c. der Hauptabschnitt (3) und der Kegelabschnitt (5) eine Mantelfläche aufweisen und die Mantelfläche des Hauptabschnitts (3) stetig in die Mantelfläche (8) des Kegelabschnitts (5) übergeht.

4. Wellengenerator (1) nach einem der Ansprüche 1 bis 3, **dadurch gekennzeichnet, dass** der Kegelabschnitt (5) als Kegelstumpf ausgebildet ist und dass
a. der Außenumfang der dem Hauptabschnitt (3) abgewandten Grundfläche des Kegelabschnitts (5) kreisrund ist ,oder dass
b. der Außenumfang (7) der dem Hauptabschnitt (3) abgewandten Grundfläche des Kegelabschnitts (5) eine von der Kreisform abweichende Form aufweist, oder dass
c. der Außenumfang (7) der dem Hauptabschnitt (3) abgewandten Grundfläche des Kegelabschnitts (5) dieselbe Form aufweist, wie der Außenumfang (7) der Grundfläche des Hauptabschnitts (3) oder der Außenumfang (7) der Grundfläche des Teilbereichs, der den Lagersitz (4) beinhaltet, oder dass
d. der Außenumfang (7) der dem Hauptabschnitt (3) abgewandten Grundfläche des Kegelabschnitts (5) oval ist, oder dass
e. der Außenumfang (7) der dem Hauptabschnitt (3) abgewandten Grundfläche des Kegelabschnitts (5) elliptisch ist.

5. Wellengenerator (1) nach einem der Ansprüche 1 bis 4, **dadurch gekennzeichnet, dass**
a. die dem Kegelabschnitt (5) zugewandte Grundfläche des Hauptabschnitts (3) und die dem Hauptabschnitt (3) zugewandte Grundfläche des Kegelabschnitts (5) zueinander deckungsgleich ausgerichtet sind, und/oder dass
b. die dem Kegelabschnitt (5) zugewandte Grundfläche des Hauptabschnitts (3) und die dem Hauptabschnitt (3) zugewandte Grundfläche des Kegelabschnitts (5) dieselbe Drehausrichtung aufweisen, und/oder dass
c. eine große Halbachse der dem Kegelabschnitt (5) zugewandten Grundfläche des Hauptabschnitts (3) und eine große Halbachse der dem Hauptabschnitt (3) zugewandte Grundfläche des Kegelabschnitts (5) parallel zueinander ausgerichtet sind, und/oder dass
d. eine kleine Halbachse der dem Kegelabschnitt (5) zugewandten Grundfläche des Hauptabschnitts (3) und eine kleine Halbachse der dem Hauptabschnitt (3) zugewandte Grundfläche des Kegelabschnitts (5) parallel zueinander ausgerichtet sind, und/oder dass
e. eine Richtung des größten Durchmessers der dem Kegelabschnitt (5) zugewandten Grundfläche des Hauptabschnitts (3) und eine Richtung des größten Durchmessers der dem Hauptabschnitt (3) zugewandte Grundfläche des Kegelabschnitts (5) parallel zueinander ausgerichtet sind, und/oder dass
f. eine Richtung des kleinsten Durchmessers der dem Kegelabschnitt (5) zugewandten Grundfläche des Hauptabschnitts (3) und eine Richtung des kleinsten Durchmessers der dem Hauptabschnitt (3) zugewandte Grundfläche des Kegelabschnitts (5) parallel zueinander ausgerichtet sind.

6. Wellengenerator (1) nach einem der Ansprüche 1 bis 5, **dadurch gekennzeichnet, dass**
a. der Hauptabschnitt (3) einen den Lagersitz (5) in axialer Richtung begrenzenden Axialanschlag (9) aufweist, oder dass
b. der Hauptabschnitt (3) einen den Lagersitz (5) in axialer Richtung begrenzenden Axialanschlag (9) aufweist, wobei der Axialanschlag (9) im Querschnitt eine kreisförmige Außenkontur (10) aufweist, oder dass
c. der Hauptabschnitt (3) einen den Lagersitz (5) in axialer Richtung begrenzenden Axialanschlag (9) aufweist, wobei der Axialanschlag (9) im Querschnitt eine von der Kreisform abweichende Außenkontur (10) aufweist, oder dass
d. der Hauptabschnitt (3) einen den Lagersitz (5) in axialer Richtung begrenzenden Axialanschlag (9) aufweist, wobei die Außenkontur (10) des Querschnitts des Axialanschlages (9) dieselbe Form aufweist, wie die Außenkontur des Querschnitts des Lagersitzes (4), oder dass
e. der Hauptabschnitt (3) einen den Lagersitz (5) in axialer Richtung begrenzenden Axialanschlag (9) aufweist, wobei die Außenkontur (10) des Querschnitts des Axialanschlages (9) dieselbe Form aufweist, wie die Außenkontur einer Grundfläche des Kegelabschnitts (5), oder dass
f. der Hauptabschnitt (3) einen den Lagersitz (5) in axialer Richtung begrenzenden Axialanschlag (9) aufweist, wobei die Außenkontur (10) des Querschnitts des Axialanschlages (9) oval ist, oder dass
g. der Hauptabschnitt (3) einen den Lagersitz (5) in axialer Richtung begrenzenden Axialanschlag (9) aufweist, wobei die Außenkontur (10) des Querschnitts des Axialanschlages (9) elliptisch ist, oder dass
h. eine an den Lagersitz (5) angrenzende, umlaufende Nut (14) für einen Sicherungsring vorhanden ist, oder dass
i. eine an den Lagersitz (5) angrenzende, umlaufende Nut (14) in der ein Sicherungsring angeordnet ist, vorhanden ist.

7. Wellengenerator (1) nach einem der Ansprüche 1 bis 6, **dadurch gekennzeichnet, dass** der Hauptabschnitt (3) und der Kegelabschnitt (5) gemeinsam einstückig aus demselben Stück Halbzeug hergestellt sind.

8. Wellengenerator (1) nach einem der Ansprüche 1 bis 7, **dadurch gekennzeichnet, dass**
a. der Wellengenerator (1) mehrteilig ausgebildet ist, wobei wenigstens ein Teil durch den Hauptabschnitt (3) und ein anderer Teil durch den Kegelabschnitt (5) gebildet ist, oder dass
b. der Wellengenerator (1) mehrteilig ausgebildet ist, wobei wenigstens ein Teil durch den Hauptabschnitt (3) und ein anderer Teil durch den Kegelabschnitt (5) gebildet ist, wobei die Teile unlösbar miteinander verbunden sind, oder dass
c. der Wellengenerator (1) mehrteilig ausgebildet ist, wobei wenigstens ein Teil durch den Hauptabschnitt (3) und ein anderer Teil durch den Kegelabschnitt (5) gebildet ist, wobei die Teile lösbar miteinander verbunden sind.

9. Wellengenerator (1) nach Anspruch 8, **dadurch gekennzeichnet, dass** der Hauptabschnitt (3) ein Steckelement (15) aufweist und dass der Kegelabschnitt (5) ein Gegensteckelement (16) aufweist, wobei das Steckelement (15) und das Gegensteckelement (16) formkomplementär ausgebildet sind.

10. Wellengenerator (1) nach Anspruch 9, **dadurch gekennzeichnet, dass** das Steckelement (15) und das Gegensteckelement (16) derart ausgebildet sind, dass der Hauptabschnitt (3) zu dem Kegelabschnitt 85) nach Herstellen der Steckverbindung automatisch derart ausgerichtet ist, dass
a. die dem Kegelabschnitt (5) zugewandte Grundfläche des Hauptabschnitts (3) und die dem Hauptabschnitt (3) zugewandte Grundfläche des Kegelabschnitts (5) zueinander deckungsgleich ausgerichtet sind, und/oder dass
b. die dem Kegelabschnitt (5) zugewandte Grundfläche des Hauptabschnitts (3) und die dem Hauptabschnitt (3) zugewandte Grundfläche des Kegelabschnitts (5) dieselbe Drehausrichtung aufweisen, und/oder dass
c. eine große Halbachse der dem Kegelabschnitt (5) zugewandten Grundfläche des Hauptabschnitts (3) und eine große Halbachse der dem Hauptabschnitt (3) zugewandte Grundfläche des Kegelabschnitts (5) parallel zueinander ausgerichtet sind, und/oder dass
d. eine kleine Halbachse der dem Kegelabschnitt (5) zugewandten Grundfläche des Hauptabschnitts (3) und eine kleine Halbachse der dem Hauptabschnitt (3) zugewandte Grundfläche des Kegelabschnitts (5) parallel zueinander ausgerichtet sind, und/oder dass
e. eine Richtung des größten Durchmessers der dem Kegelabschnitt (5) zugewandten Grundfläche des Hauptabschnitts (3) und eine Richtung des größten Durchmessers der dem Hauptabschnitt (3) zugewandte Grundfläche des Kegelabschnitts (5) parallel zueinander ausgerichtet sind, und/oder dass
f. eine Richtung des kleinsten Durchmessers der dem Kegelabschnitt (5) zugewandten Grundfläche des Hauptabschnitts (3) und eine Richtung des kleinsten Durchmessers der dem Hauptabschnitt (3) zugewandte Grundfläche des Kegelabschnitts (5) parallel zueinander ausgerichtet sind.

11. Wellengenerator (1) nach Anspruch 10 oder 11, **dadurch gekennzeichnet, dass**
a. das Steckelement (15) auf der dem Kegelabschnitt (5) zugewandten Grundfläche des Hauptabschnitts (3) angeordnet ist, oder dass
b. das Gegensteckelement (16) auf der dem Hauptabschnitt (3) zugewandten Grundfläche des Kegelabschnitts (5) angeordnet ist, oder dass
c. das Steckelement (15) und/oder das Gegensteckelement (16) im Querschnitt eine andere Außenkontur aufweisen, als der Hauptabschnitt, oder dass
d. das Steckelement (15) und/oder das Gegensteckelement (16) im Querschnitt die gleiche Außenkontur aufweisen, wie der Hauptabschnitt, wobei jedoch die Richtungen des größten Durchmessers verschieden sind, oder dass
e. das Steckelement (15) und/oder das Gegensteckelement (16) im Querschnitt die gleiche Außenkontur aufweisen, wie der Hauptabschnitt, wobei jedoch die Richtungen des kleinsten Durchmessers verschieden sind, oder dass
f. das Steckelement (15) und/oder das Gegensteckelement (16) im Querschnitt eine von der Kreisform abweichende Außenkontur aufweisen, oder dass
g. das Steckelement (15) und/oder das Gegensteckelement (16) im Querschnitt oval ausgebildet ist, oder dass
h. das Steckelement (15) und/oder das Gegensteckelement (16) im Querschnitt elliptisch ausgebildet ist, oder dass
i. das Steckelement (15) und das Gegensteckelement (16) konisch ausgebildet sind, oder dass
j. das Steckelement (15) durch die Außenkontur des dem Kegelabschnitt (5) abgewandten Grundfläche des Hauptabschnitts (3) gebildet ist und/oder durch den Axialanschlag (9) gebildet ist.

12. Wellengenerator (1) nach einem der Ansprüche 8 bis 11, **dadurch gekennzeichnet, dass**
a. ein Haltelement (17), das, insbesondere ausschließlich in einer bestimmten Drehausrichtung, mit dem Kegelabschnitt (5) verbindbar ist oder verbunden ist, das Gegensteckelement (16) aufweist, oder dass
b. ein Haltelement (17), das, insbesondere ausschließlich in einer bestimmten Drehausrichtung, mit dem Kegelabschnitt (5) verbindbar ist oder verbunden ist, das Gegensteckelement (16) aufweist, wobei der Hauptabschnitt (3) zwischen dem Haltelement (17) und dem Kegelabschnitt (5) einspannbar oder eingespannt ist.

13. Spannungswellengetriebe, das einen Wellengenerator nach einem der Ansprüche 1 bis 12 oder wenigstens den Hauptabschnitt eines Wellengenerators nach einem der Ansprüche 1 bis 12 beinhaltet, wobei auf den Lagersitz (4) wenigstens ein Wälzlager (2) unter Verwendung der Mantelfläche des Kegelabschnitts (5) als Führungsfläche aufgepresst ist,

14. Verfahren zum Herstellen eines Spannungswellengetriebes, **dadurch gekennzeichnet, dass** wenigstens ein Wälzlager axial auf den Kegelabschnitt (5) eines Wellengenerators nach einem der Ansprüche 1 bis 12 aufgesteckt und anschließend auf den Lagersitz (4) des mit dem Kegelabschnitt (5) verbundenen Hauptabschnitts (3) aufgeschoben wird, wobei die Mantelfläche des Kegelabschnitts (5) als Führungsfläche fungiert.

15. Verfahren nach Anspruch 14, **dadurch gekennzeichnet, dass** der Kegelabschnitt nach dem Aufschieben des Wälzlagers auf den Lagersitz entfernt wird und der Wellengenerator ohne den Kegelabschnitt in dem Spannungswellengetriebe verbaut wird.
